# EUROPEAN PATENT APPLICATION

(11) **EP 2 955 340 A1**
(43) Date of publication of application: **16.12.2015**
(21) Application number: 15170601.7
(22) Date of filing: 03.06.2015
(51) Int. Cl.: F01K 13/00, F01K 23/10, F01K 23/06

(54) **SYSTEM AND METHOD FOR THERMAL MANAGEMENT**

(30) Priority: 12.06.2014 US 201414303004
(71) Applicant: General Electric Company, Schenectady, NY 12345 (US)
(72) Inventor: Myers, Scott Richard, Costa Mesa, CA California 92626 (US)
(74) Representative: Cleary, Fidelma

(57) **Abstract**

A system includes a first unit (10). The first unit includes a condenser (54) configured to condense a working fluid (45) circulating in a Rankine cycle. The Rankine cycle includes an evaporator (44) configured to evaporate the working fluid (45) by absorbing heat from a heating fluid (29) circulated in a heating fluid circuit. The first unit (10) also includes a heat exchanger (28) configured to transfer heat from a heat source (16) to the heating fluid (29). The first unit (10) further includes a driving pump (42) configured to provide a driving force for circulating the heating fluid (29) in the heating fluid circuit. The first unit (10) still includes a common support structure (14). The condenser (54), the heat exchanger (28), and the driving pump (42) are mounted on the common support structure (14).

## Description

### BACKGROUND

The subject matter disclosed herein relates to power generation systems, such as thermally driven power generation systems.

Power generation systems typically include a large number of components, such as an electrical generator, thermal and/or mechanical components, electrical wiring, fluid conduits, and control systems. As a result, the installation and deployment of power generation systems is typically complicated and time consuming. For example, at a customer's site, each component may require individual installation, configuration, and interconnection with other components of a power generation system. After installation, the power generation system may require further alignment, testing, and configuration of software and/or hardware controls.

### BRIEF DESCRIPTION

Certain embodiments commensurate in scope with the present disclosure are summarized below. These embodiments are not intended to limit the scope of the claim, but rather these embodiments are intended only to provide a brief summary of the present disclosure. Indeed, embodiments of the present disclosure may encompass a variety of forms that may be similar to or different from the embodiments set forth below.

In a first embodiment, a system includes a first unit. The first unit includes a condenser configured to condense a working fluid circulating in a Rankine cycle. The Rankine cycle includes an evaporator configured to evaporate the working fluid by absorbing heat from a heating fluid circulated in a heating fluid circuit. The first unit also includes a heat exchanger configured to transfer heat from a heat source to the heating fluid. The first unit further includes a driving pump configured to provide a driving force for circulating the heating fluid in the heating fluid circuit. The first unit still includes a common support structure. The condenser, the heat exchanger, and the driving pump are mounted on the common support structure.

In a second embodiment, a method includes supporting, via a common support structure of a first unit, a condenser configured to condense a working fluid circulating in a Rankine cycle. The Rankine cycle includes an evaporator configured to evaporate the working fluid by absorbing heat from a heating fluid circulated in a heating fluid circuit. The method also includes supporting, via the common support structure of the first unit, a heat exchanger configured to transfer heat from a heat source to the heating fluid. The method further includes supporting, via the common support structure of the first unit, a driving pump configured to provide a driving force for circulating the heating fluid in the heating fluid circuit.

In a third embodiment, a system includes a controller. The controller includes one or more tangible, non-transitory, machine-readable media collectively storing one or more sets of instructions. The controller also includes one or more processing devices configured to execute the one or more sets of instructions to monitor or control operations of the system to condense in a condenser a working fluid circulating in a Rankine cycle, wherein the Rankine cycle includes an evaporator configured to evaporate the working fluid by absorbing heat from a heating fluid circulated in a heating fluid circuit, to transfer heat from a heat source to the heating fluid in a heat exchanger, and to provide a driving force for circulating the heating fluid in the heating fluid circuit using a pump, wherein the condenser, the heat exchanger, the pump, and the controller are disposed on a common support structure.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a block diagram of an embodiment of a thermal management module integrated with an Organic Rankine Cycle (ORC);
FIG. 2 is a block diagram of an embodiment of a thermal management module integrated with the ORC;
FIG. 3 is a perspective view of an embodiment of the thermal management module of FIG. 1; and
FIG. 4 is a perspective view of an embodiment of the thermal management module of FIG. 2.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

In certain embodiments, an Organic Rankine Cycle (ORC)-based power generation system (e.g., employing heat recovery for power generation) may employ a number of thermal management components, such as a heat exchanger, a pumping and pressurizing system, an exhaust silencer, and a valve and ducting system. In accordance with the present disclosure, an embodiment of a thermal management module may include various thermal management components in a single transportable unit (e.g., a single container, enclosure, or skid). The thermal management components may include a bypass valve to direct a heat source fluid from a heat source (e.g., exhaust heat) to a heat exchanger, the heat exchanger to capture heat from the heat source fluid and transfer the heat to a heating fluid, a pump to provide a driving force for circulating the heating fluid, and an exhaust silencer to reduce noise associated with the exhaust. A condenser, which may be a component of the ORC system and configured to condense a working fluid circulating in the ORC, may also be included in the thermal management module. By integrating various thermal management components in the single transportable container or enclosure, for example, at a factory, the risk of unpredictable installation at a customer site and/or the unforeseen cost of installation and service may be reduced. The thermal management module disposed within the single container or enclosure may also be readily pre-tested to ensure predictable and repeatable performance. Furthermore, labor for assembling various thermal management components may be controlled and reduced in a factory setting.

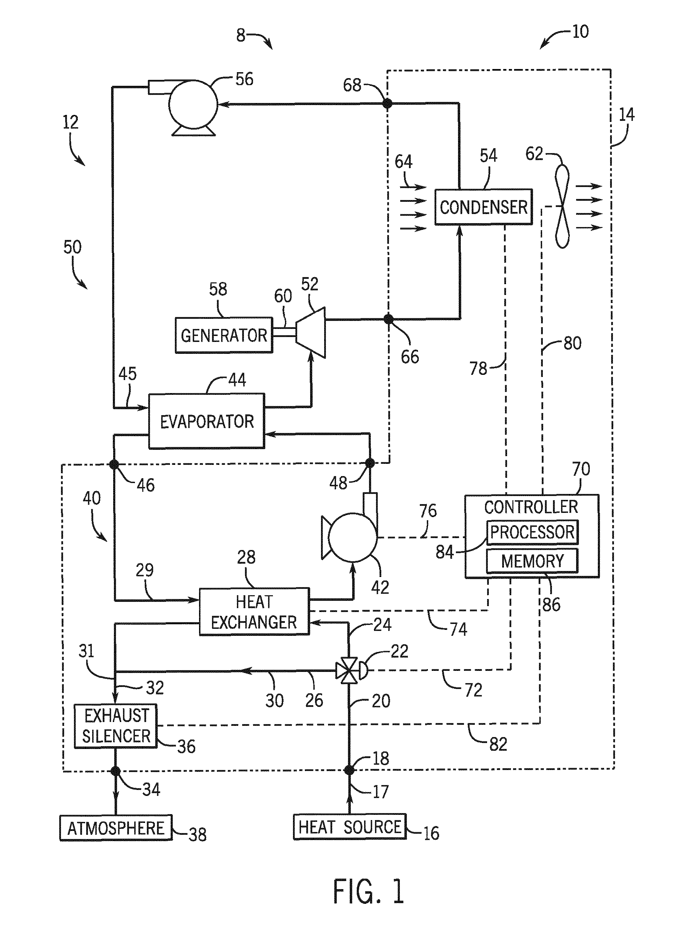

With the foregoing in mind, FIG. 1 illustrates schematically an embodiment of a heat recovery system 8 including a thermal management module 10 (e.g., an integrated unit) in accordance with the present disclosure integrated with an ORC system 12. The thermal management module 10 includes a common support structure or unit 14 (e.g., a container, an enclosure, or a skid), illustrated as a dash-and-dotted line box in FIG. 1. The common support structure 14 may partially or entirely contain components of the thermal management module 10, or the common support structure 14 may represent a single common base, such as a skid. The thermal management module 10 includes various components, as discussed in greater detail below, mounted on and/or in the common support structure 14 (e.g., disposed within an enclosure). In some embodiments, the common support structure 14 may partially or entirely contain both components of the thermal management module 10 and the components of the ORC system 12.

The thermal management module 10 is connected to a heat source 16. The heat source 16 provides a heat source fluid 17 (e.g., liquid, gas, and/or solid) to the thermal management module 10 via a heat inlet 18 on the common support structure 14. The heat source 16 may be any system or process that produces heat, including, but not limited to, geothermal water from a production well, exhaust gas from a gas turbine or a reciprocating engine, heat from a compressor or pump system, heat from a conventional fuel or biomass boiler system, waste heat from a reactor (e.g., a gasifier, a partial oxidation unit, and so forth), waste heat from a gas treatment unit (e.g., an acid gas removal unit, a carbon capture unit, and so forth), waste heat from a chemical production unit, waste heat from a gas compressor, a land fill flare, waste heat from an industrial process, or heat from a heated cooling fluid after cooling a process.

The heat source fluid 17 may be directed to the thermal management module 10 along a conduit 20 fluidly coupling the heat inlet 18 and a three-way valve 22. The three-way valve 22 splits the heat source fluid 17 into two heat streams, a first heat stream 24 and a second heat stream 26. The three-way valve 22 may be used to control the distribution (e.g., percentage) of the heat source fluid 17 between the first and second heat streams 24, 26. For example, the first heat stream 24 may be approximately 0% to 100% of the heat source fluid 17 provided to the three-way valve 22, and correspondingly, second heat stream 26 may be approximately 100% to 0% of the heat source fluid 17 provided to the three-way valve 22. In some embodiments, two separate valves, instead of the three-way valve 22, may be used to control the first and second heat streams 24, 26, respectively.

The first heat stream 24 is directed through a heat exchanger 28 of the thermal management module 10. As discussed in detail below, in the heat exchanger 28, the first heat stream 24 may transfer heat to a heating fluid 29, heat from which may be used by the ORC system 12 to produce work.

The second heat stream 26 is directed along a bypass conduit 30 that bypasses the heat exchanger 28. The first heat stream 24 flowing through the heat exchanger 28 and the second heat stream 26 flowing along the bypass conduit 28 may be recombined to a recombined heat stream 31 in a conduit 32. The conduit 32 may be coupled to a heat outlet 34 on the common support structure 14, such that the recombined heat stream 31 may flow out of the thermal management module 10.

An exhaust silencer 36 (e.g., a muffler) may be disposed along the conduit 32 in certain embodiments. The exhaust silencer 36 is configured to reduce noise associated with the recombined heat stream 31. The exhaust silencer 36 may be any type of silencer suitable for reducing loudness of sound power associated with the recombined heat stream 31 passing through the conduit 32 and/or other flow paths. For example, the exhaust silencer 36 may include one or more tubes (e.g., perforated) configured to create reflected sound waves that interfere with each other or cancel each other out.

The recombined heat stream 31 exiting the thermal management module 10 may be directed to atmosphere 38. However, in some embodiments, the atmosphere 38 may be replaced by another heat recovery system, such as an electricity generation system, an oil production facility, or a geothermal system. In other embodiments, the atmosphere 38 may be replaced by a reservoir, such as a treatment system, a sewer, or a retaining pond, among others.

As noted above, a portion of the heat source fluid 17 provided by the heat source 16 is directed through the heat exchanger 28 where the heating fluid 29 may be heated. The heating fluid 29 may be any fluid capable of absorbing heat, such as water, brine, or refrigerant, among others. The heat exchanger 28 may be any suitable type of heat exchanger, including, but not limited to, a shell and tube heat exchanger, a plate heat exchanger, a regenerative heat exchanger, or an adiabatic wheel heat exchanger, or any combination thereof. The heating fluid 29 is circulated in a heating fluid loop 40. The heating fluid loop 40 includes the heat exchanger 28, a driving pump 42, and an evaporator 44. The heat exchanger 28 and the driving pump 42 are disposed within the common support structure 14 of the thermal management module 10. In addition, the evaporator 44 is included in the ORC system 12.

The evaporator 44 of the ORC system 12 may be coupled to the thermal management module 14 via a heating fluid inlet 46 and a heating fluid outlet 48 on the common support structure 14. After the heating fluid 29 is heated in the heat exchanger 28 by the first heat stream 24, the heating fluid 29 is pumped by the driving pump 42 to the evaporator 44 via the heating fluid outlet 48. In the evaporator 44, a working fluid 45 circulating in the ORC system 12 absorbs heat from the heating fluid 29. The cooled heating fluid 29 then flows back to the thermal management module 10 via the heating fluid inlet 46. In the heat exchanger 28, the cooled heating fluid 29 absorbs heat from the first heat stream 24 again and the heating fluid 29 circulates in the heating fluid loop 40 for additional cycles.

The ORC system 12 includes a working fluid loop 50 that circulates the working fluid 45 to recover heat from the heat source 16 via the heating fluid loop 40. The working fluid 45 may be a hydrocarbon component (e.g., propane or isobutane), a fluorocarbon (e.g., R-22), an inorganic component (e.g., ammonia or sulfur dioxide), or a hybrid mixture of these components. By way of further example, the working fluid 45 may include cyclohexane, cyclopentane, thiophene, ketones, aromatics, propane, butane, pentafluoro-propane, pentafluoro-butane, pentafluoro-polyether, or any combination thereof. The working fluid 45 used in the ORC system 12 may be selected based on one or more properties of the heat source fluid 17, such as temperature, pressure, specific heat, or the like. For example, if the temperature of the heat source fluid 17 is relatively high, certain working fluids 45 with higher evaporation temperatures may be more suitable than others.

The working fluid loop 50 includes the evaporator 44, a turbine 52, a condenser 54, and a pump 56. As the working fluid 45 absorbs heat from the first heat stream 24 in the evaporator 44, all or a substantial portion of the working fluid 45 may change from a liquid phase to a vapor phase. The evaporator 44 may be any suitable type for vaporizing the working fluid 45, including but not limited to, a shell and tube evaporator, a falling or rising film evaporator, a bare tube evaporator, a plate evaporator, a finned evaporator, or any combinations thereof.

The vapor phase working fluid 45 may then flow to an expander, such as the turbine 52, where the vapor phase working fluid 45 may expand and cause the turbine 52 to rotate. A load, such as an electrical generator 58, may be operatively coupled to the turbine 52 via a shaft 60. The rotation from the shaft 60 produces motive power that may be utilized by the electrical generator 58 to produce electricity. The turbine 52 may, for example, be a radial type expander, axial type expander, impulse type expander, high temperature screw type expander, scroll type expander, or positive displacement type expander, or include a parallel or series arrangement of turbines, such as 1, 2, 3, 4, 5, 6, etc. stages of turbines.

The working fluid 45, which has been reduced in pressure after expansion in the turbine 52, flows to the condenser 54. The condenser 54 may condense the working fluid 45 from the vapor phase to the liquid phase by transferring heat from the working fluid 45 to the environment. For example, the condenser 54 may include one or more fans 62 that draw ambient air 64 through the condenser 54 to absorb heat from the working fluid 45 flowing through the condenser 54. Alternatively or additionally, the one or more fans 62 may blow ambient air 64 through the condenser 54 to absorb heat from the working fluid 45 flowing through the condenser 54.

As illustrated in FIG. 1, the condenser 54, being a part of the ORC system 12, is disposed within the common support structure 14 of the thermal management module 10. The condenser 54 may be coupled to the ORC system 12 via a working fluid inlet 66 and a working fluid outlet 48 on the common support structure 14. The working fluid 45, after exiting the turbine 52, flows to the condenser 54 via the working fluid inlet 66. From the condenser 54 and via the working fluid outlet 68, the working fluid 45, which is now cooled and in the liquid phase, flows to the pump 56. The pump 56 is configured to increase the pressure of the working fluid 45 and to provide a driving force to circulate the working fluid 45 through the working fluid loop 50. The pressurized working fluid 45 from the pump 56 remains in the liquid state. From the pump 56, the working fluid 45 flows back to the evaporator 44.

The thermal management module 10 may also include a controller 70 configured to control and coordinate operations of various components of the thermal management module 10. The controller 70 may be disposed within, on, or adjacent to the common support structure 14 of the thermal management module 10. As illustrated, the controller 70 is coupled to the three-way valve 22 via a connection 72 (e.g., wired, wireless, or a combination thereof) to control, for example, the amount and relative percentage of the heat transferred to the first and second heat streams 24, 26. The controller 70 may also be coupled to the heat exchanger 28 via a connection 74 (e.g., wired, wireless, or a combination thereof) to control the operations of the heat exchanger 28, including but not limited to, temperatures, pressures, and/or flow rates of the first heat stream 24 and the heating fluid 29 through the heat exchanger 28, effective heat exchange area, or the like. The controller 70 may also be coupled to the driving pump 42 via a connection 76 (e.g., wired, wireless, or a combination thereof) to control, for example, the pumping rate and the pressure of the heating fluid 29 through the driving pump 42. The controller 70 may also be coupled to the condenser 54 via a connection 78 (e.g., wired, wireless, or a combination thereof) to control, for example, the flow rate and the pressure of the working fluid 45 through the condenser 54. The controller 70 may also be coupled to the one or more fans 62 via a connection 80 (e.g., wired, wireless, or a combination thereof) to control, for example, the rotation rate of the blades of the one or more fans 62. The controller 70 may also be coupled to the exhaust silencer 36 via a connection 82 (e.g., wired, wireless, or a combination thereof) to control, for example, the flow rate and the pressure of the recombined heat stream 31 through the exhaust silencer 36.

The controller 70 may include a distributed control system (DCS) or any computer-based workstation that is fully or partially automated. For example, the controller 70 may be any device employing a general purpose or an application-specific processor 84, both of which may generally include memory circuitry 86 for storing instructions related to pressure and flow rates, for example. The processor 84 may include one or more processing devices, and the memory circuitry 86 may include one or more tangible, non-transitory (i.e., not signals), machine-readable media collectively storing instructions executable by the processor 84 to perform the methods and control actions described herein. In some embodiments, the memory circuitry 86 may store instructions executable by the processor 84 to perform coordinated operations of the system (e.g., the thermal management module 10) set up in a factory, including, but not limited to, pre-setup, pre-alignment, pre-calibration, pre-testing, troubleshooting, and so forth.

Such machine-readable media can be any available media other than signals that can be accessed by the processor or by any general purpose or special purpose computer or other machine with a processor. By way of example, such machine-readable media can include RAM, ROM, EPROM, EEPROM, CD-ROM, or other optical disk storage, magnetic disk storage or other magnetic storage devices, or any other medium which can be used to carry or store desired program code in the form of machine-executable instructions or data structures and which can be accessed by the processor or by any general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions comprise, for example, instructions and data which cause the processor or any general purpose computer, special purpose computer, or special purpose processing machines to perform a certain function or group of functions.

As illustrated in FIG. 1, the thermal management module 10 may include within the single transportable common support structure 14 various thermal management components, including the three-way valve 22, the heat exchanger 28, the driving pump 42, the condenser 54, and the exhaust silencer 36. The common support structure 14 may be connected to other systems (e.g., the ORC system 12, the heat source 16, the atmosphere 38) via various connection ports (e.g., 18, 34, 46, 48, 66, 68) on the common support structure 14. By integrating various thermal management components in the single transportable common support structure 14, the risk of unpredictable installation at a customer site and/or the unforeseen cost of installation and service may be reduced. In addition, the various components of the thermal management module 10, including hardware and software (e.g., instructions and operation system stored in the memory circuitry 86) disposed within the single common support structure 14 may also be readily pre-configured, pre-aligned, pre-calibrated, and/or pre-tested to ensure predictable and repeatable performance. Furthermore, labor for assembling, including customizing, various thermal management components may be controlled and reduced in a factory setting.

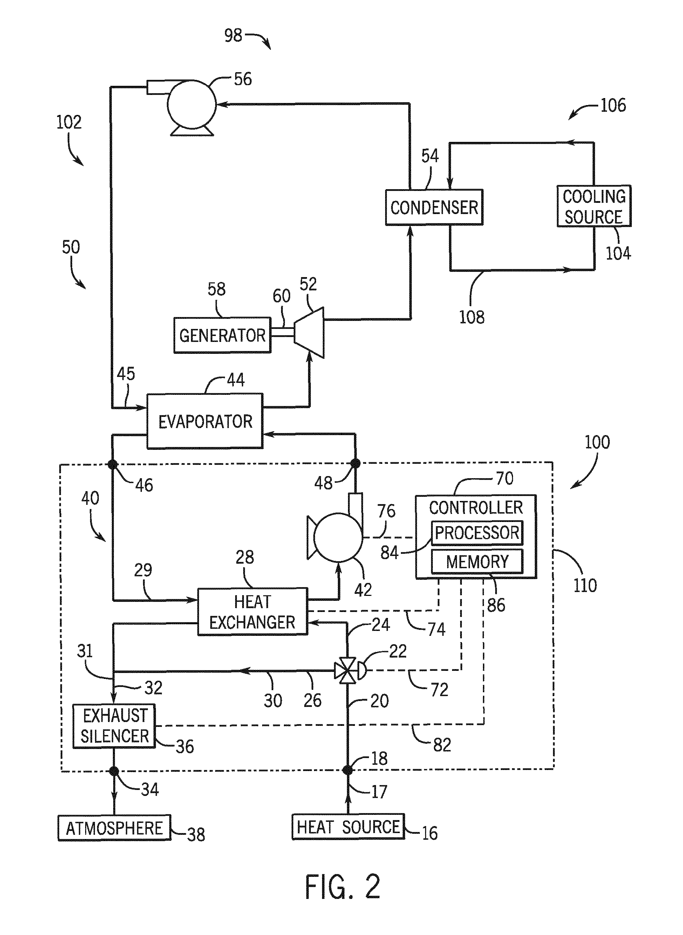

FIG. 2 illustrates schematically another embodiment of a heat recovery system 98 including a thermal management module 100 (illustrated with a dash-and dotted line box) in accordance with the present disclosure integrated with an ORC system 102. In the heat recovery system 98, the condenser 54 is not coupled to the one or more fans 62 illustrated in FIG. 1. Instead, the condenser 54 may be coupled to an external cooling source 104. As such, the thermal management module 100 is similar to the thermal management module 10 illustrated in FIG. 1 except that the thermal management module 100 does not include the condenser 54. In addition, the ORC system 102 may include the condenser 54 in the embodiment illustrated in FIG. 2, and the thermal management module 100 may not include the working fluid inlet 66 and the working fluid outlet 68. Furthermore, the controller 70 of the thermal management module 100 may not include the connection 78 coupled between the controller 70 and the condenser 54.

The thermal management module 100 includes a common support structure or unit 110 (e.g., a container, an enclosure, or a skid), similar to the common support structure 14 illustrated in FIG. 1, and illustrated also as a dash-and-dotted line box in FIG. 2. The common support structure 110 may partially or entirely contain components of the thermal management module 100, or the common support structure 110 may represent a single common base, such as a skid. In some embodiments, the common support structure 110 may partially or entirely contain both components of the thermal management module 100 and the components of the ORC system 102.

The cooling source 104 may be any suitable heat rejection device, including but not limited to, a cooling tower, a sea, a lake, a river, or a cold water reservoir, or any combination thereof. The condenser 54 may be any suitable type of fluid-cooled condenser, including, but not limited to, a double pipe condenser, a double tube condenser, a shell and coil condenser, a shell and tube condenser, or any combination thereof. As such, the embodiment illustrated in FIG. 2 may utilize an external cooling source (e.g., the cooling source 104) while reducing dimensions of the common support structure 14 by eliminating the condenser 54.

A cooling fluid loop 106 includes the condenser 54 and the cooling source 104 and circulates a cooling fluid 108 to absorb heat from the working fluid 45 in the condenser 54. The cooling fluid 108 flows from the cooling source 104 to the condenser 54. In the condenser 54, the cooling fluid 108 absorbs heat from the working fluid 45, thereby causing the working fluid 45 to condense. The heated cooling fluid 108 then flows back to the cooling source 104 and rejects heat from the heated cooling fluid 108 to the environment. In certain embodiments, a cooling loop pump may be included in the cooling fluid loop 106 to provide a driving force for circulating the cooling fluid 108 in the cooling fluid loop 106. In other embodiments, the cooling fluid loop 106 may receive make-up cooling fluid from a make-up well to replace the lost cooling fluid that is removed as, for example, blowdown.

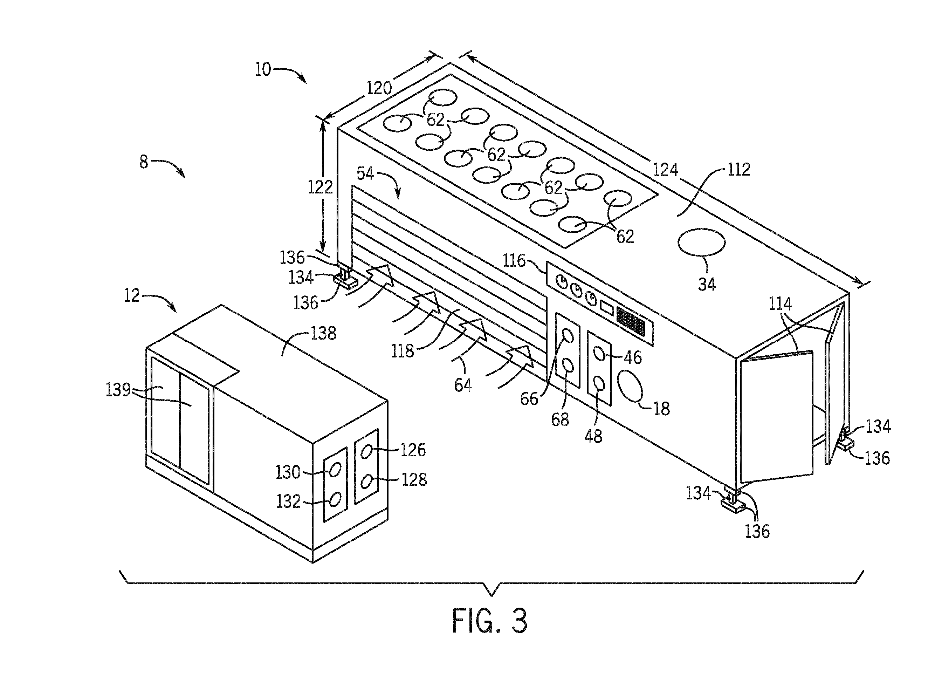

FIG. 3 is a perspective view of an embodiment of the thermal management module 10 of FIG. 1. The heat recovery system 8 includes the thermal management module 10 in accordance with the present disclosure and the ORC system 12. The thermal management module 10 has an enclosure 112 (e.g., the common support structure 14 of FIG. 1). The enclosure 112 may be manufactured from any suitable metallic or non-metallic material, such as steel, iron, aluminum, carbon fiber, plastics, or any combination thereof.

The enclosure 112 may include one or more access panels 114 that can be opened by a user to access various components of the thermal management module 10 that are disposed within the enclosure 112. As such, the inspection and maintenance of the thermal management module 10 may be performed without substantial disassembly. As discussed above, in certain embodiments, the components of the thermal management module 10 may include the condenser 54, the heat exchanger 28, the driving pump 42, the three-way valve 22, the exhaust silencer 36, the controller 70, fluid conduits, electrical wirings, and connections.

The thermal management module 10 may also include a control interface 116 that provides the user with information on the performance and settings of the thermal management module 10. The control interface 116 may be coupled to the controller 70 and may be a part of, or independent of the controller 70. In certain embodiments, the control interface 116 may include a display screen, a number of indicator meters, a keyboard, or any combination thereof, so that the user may monitor the operation of the thermal management module 10 and adjust any settings or parameters of the thermal management module 10.

As illustrated, the thermal management module 10 includes the heat inlet 18 via which the heat source fluid 17 from the heat source 16 may be provided to the thermal management module 10, and the heat outlet 34 via which the recombined heat stream 31 may be transferred out of the thermal management module 10. The locations of the heat inlet 18 and the heat outlet 34 on the enclosure 112 may vary, such as on the front, back, top, or bottom of the enclosure 112.

As noted above, the thermal management module 10 may also include a number of ports via which the thermal management module 10 may be connected with the ORC system 12. For example, the thermal management module 10 includes the working fluid inlet 66 and the working fluid outlet 68, and the ORC system 12 includes corresponding working fluid inlet 126 and working fluid outlet 128. The working fluid inlet 66 of the thermal management module 10 may be connected via any suitable connector and/or conduit (e.g., a tube or a pipe) with the working fluid inlet 126 of the ORC system 12, and the working fluid outlet 68 of the thermal management module 10 may be connected via any suitable connector and/or conduit (e.g., a tube or a pipe) with the working fluid outlet 128 of the ORC system 12. Accordingly, the working fluid 45 of the ORC system 12 may flow to the thermal management module 10 (e.g., to the condenser 54) via the working fluid inlets 126, 66 and flow back to the ORC system 12 via the working fluid outlets 68, 128.

Similarly, the thermal management module 10 includes the heating fluid inlet 46 and the heating fluid outlet 48, and the ORC system 12 includes corresponding heating fluid inlet 130 and heating fluid outlet 132. The heating fluid inlet 46 of the thermal management module 10 may be connected via any suitable connector and/or conduit (e.g., a tube or a pipe) with the heating fluid inlet 130 of the ORC system 12, and the heating fluid outlet 48 of the thermal management module 10 may be connected via any suitable connector and/or conduit (e.g., a tube or a pipe) with the heating fluid outlet 132 of the ORC system 12. Accordingly, the heating fluid 29 of the thermal management module 10 may flow to the ORC system 12 (e.g., to the evaporator 44) via the heating fluid inlets 46, 130 and flow back to the thermal management module 10 via the heating fluid outlets 132, 48.

The thermal management module 10 includes openings 118 for intake of ambient air 64 and fans 62 for drawing ambient air 64 through the condenser 54. Ambient air 64 that passes through the condenser 54 of the thermal management module 10 may absorb heat from the working fluid 45 flowing through the condenser 54.

The thermal management module 10 is constructed in a manner that provides simplified transportation to a desired customer site. For example, the enclosure 112 of the thermal management module 10 may have overall dimensions that facilitate transport and integration with other systems (e.g., an energy generation system). In some embodiments, the enclosure 112 of the thermal management module 10 may have a width 120 less than approximately 10 meters, such as less than approximately 8 meters, 6 meters, 4 meters, or 2 meters. The enclosure 112 of the thermal management module 10 may have a height 122 less than approximately 10 meters, such as less than approximately 8 meters, 6 meters, 4 meters, or 2 meters. The enclosure 112 of the thermal management module 10 may have a length 124 between approximately 18 meters and 6 meters, such as between approximately 16 meters and 8 meters, 14 meters and 10 meters, or 13 meters and 11 meters. By way of further example, the length 124 of the enclosure 112 of the thermal management module 10 may be approximately 12 meters.

The thermal management module 10 may also include a plurality of legs or stilts 134 underneath the enclosure 112 (e.g., directly attached to the enclosure 112, or disposed on a platform supporting the enclosure 112). The plurality of legs 134 may have any suitable height and be configured to support and elevate the thermal management module 10. Accordingly, the plurality of legs 134 may provide easy access underneath the thermal management module 10 for various purposes, including, but not limited to, installation of the thermal management module 10, maintenance of the thermal management module 10, and connection of the of thermal management module 10 with other systems. For example, in some embodiments, the thermal management module 10 may be disposed on top of a heat source system (e.g., the heat source 16), and the plurality of legs 134 may provide easy connection with and access to the heat source system. The heat source system may include, but is not limited to, a reciprocating engine powered generator, a turbine engine powered generator, a compressor, a pump system, a conventional fuel boiler system, or a biomass boiler system. In some embodiments, each of the plurality of legs 134 may include a camlock 136 on bottom of the each of the plurality of legs 134, or two camlocks 136 on both top and bottom of the each of the plurality of legs 134. The camlocks 136 may be configured to removably fasten each of the plurality of legs 134 to a surface (e.g., bottom of the thermal management module 10, ground, or a surface of another system, such as the ORC system 12).

The ORC system 12 of the heat recovery system 8 has an enclosure 138. Although the enclosure 138 is illustrated in FIG. 3, in some embodiments, the ORC system 12 may have a common support structure or unit (e.g., a container, an enclosure, or a skid). The common support structure may partially or entirely contain components of the ORC system 12, or the common support structure may represent a single common base, such as a skid. The enclosure 138 of the ORC system 12 may include one or more access panels 139 that can be opened by the user to access various components of the ORC system 12 that are disposed within the enclosure 138. As discussed above, the components of the ORC system 12 may include the evaporator 44, the turbine 52, the generator 58, the pump 56, fluid conduits, electrical wirings, and connections. In some embodiments, a common enclosure, instead of the separate enclosure 112 and enclosure 138, may enclose components of both the thermal management module 10 and the ORC system 12.

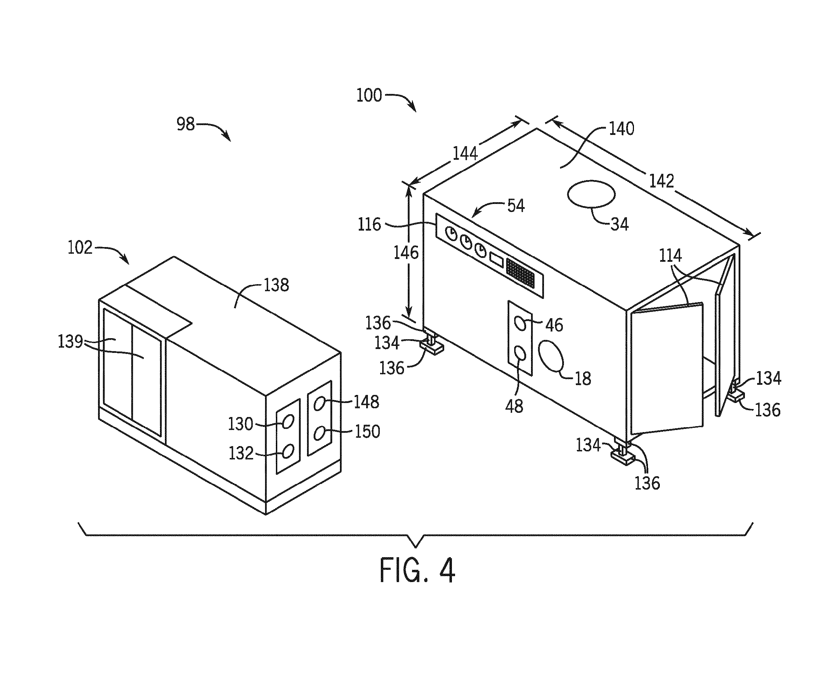

FIG. 4 is a perspective view of an embodiment of the thermal management module 100 of FIG. 2. The heat recovery system 98 includes the thermal management module 100 in accordance with the present disclosure and the ORC system 102. As the heat recovery system 98 and the thermal management module 100 of FIG. 4 include similar or same components as the heat recovery system 8 and the thermal management module 10 of FIG. 3, the components in FIG. 4 will be discussed in a similar context as in FIG. 3 using the same reference numerals for the same elements.

The thermal management module 100 has an enclosure 140 (e.g., the common support structure 110 of FIG. 2). The enclosure 140 may be manufactured from any suitable metallic or non-metallic material, such as steel, iron, aluminum, carbon fiber, plastics, or any combination thereof.

The enclosure 140 may include one or more access panels 114 that can be opened by the user to access various components of the thermal management module 100 that are disposed within the enclosure 140. As discussed above, the components of the thermal management module 100 may include the heat exchanger 28, the driving pump 42, the three-way valve 22, the exhaust silencer 36, the controller 70, fluid conduits, electrical wirings, and connections.

Similar to the thermal management module 10 of FIG. 3, the thermal management module 100 may include the control interface 116 that provides the user with information on the performance and settings of the thermal management module 100. The thermal management module 100 also includes the heat inlet 18 and the heat outlet 34 for transferring the heat in and out of the thermal management module 100. Furthermore, the thermal management module 100 includes a number of ports via which the thermal management module 100 may be connected with the ORC system 12, including the heating fluid inlet 46 and the heating fluid outlet 48.

Because the thermal management module 100 does not include the condenser 54, air intake openings (e.g., openings 118 of FIG. 3) and fans (e.g., fans 62 of FIG. 3), the thermal management module 100 generally has a shorter length than the thermal management module 10. The enclosure 140 of the thermal management module 100 may have a length 142 between approximately 10 meters and 2 meters, such as between approximately 9 meters and 3 meters, 8 meters and 4 meters, or 7 meters and 5 meters. By way of further example, the length 142 of the enclosure 140 of the thermal management module 100 may be approximately 6 meters. The enclosure 140 of the thermal management module 100 may have a width 144 and a height 146 that are similar to the respective width 120 and the height 122 of the thermal management module 10.

The ORC system 102 utilizes the external cooling source 104 to absorb the heat from the working fluid 45 in the condenser 54. Accordingly, the ORC system 102 includes a cooling fluid inlet 148 and a cooling fluid outlet 150 for connecting the ORC system 102 with the external cooling source 104 and transferring the cooling fluid 108 in and out of the ORC system 102, respectively. In some embodiments, a common enclosure, instead of the separate enclosure 140 and enclosure 138, may enclose components of both the thermal management module 100 and the ORC system 102

Technical effects of the present disclosure include providing a thermal management module 10 with a single transportable common support structure 14 (e.g., the enclosure 112) that encloses various thermal management components, including the heat exchanger 28, the driving pump 42, the three-way valve 22, the exhaust silencer 36, and the condenser 54, and/or providing a thermal management module 100 with a single transportable common support structure 110 (e.g., the enclosure 112) that encloses various thermal management components, including the heat exchanger 28, the driving pump 42, the three-way valve 22, and the exhaust silencer 36. The thermal management module 10 or 100 is configured to transfer heat from a heat source 16 to an ORC system 12 that converts the heat to work to produce electricity. By integrating various thermal management components in the single transportable common support structure 14 or 110, the risk of unpredictable installation at a customer site and/or the unforeseen cost of installation and service may be reduced. In addition, the various components of the thermal management module 10 or 100, including hardware and software (e.g., instructions and operation system stored in the memory circuitry 86) disposed within the single common support structure 14 or 110 may also be readily pre-configured, pre-aligned, pre-calibrated, and/or pre-tested to ensure predictable and repeatable performance. Furthermore, labor for assembling, including customizing, various thermal management components may be controlled and reduced in a factory setting.

This written description uses examples to disclose the invention, including the best mode, and also to enable any person skilled in the art to practice the invention, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method, comprising:
   supporting, via a common support structure of a first unit, a heat exchanger configured to transfer heat from a heat source to a heating fluid circulated in a heating fluid circuit; and
   supporting, via the common support structure of the first unit, a driving pump configured to provide a driving force for circulating the heating fluid in the heating fluid circuit.
2. The method of clause 1, comprising supporting, via the common support structure of the first unit, a condenser configured to condense a working fluid circulating in a Rankine cycle, wherein the Rankine cycle comprises an evaporator configured to evaporate the working fluid by absorbing heat from the heating fluid circulated in the heating fluid circuit.
3. The method of clause 1 or 2, comprising supporting, via the common support structure of the first unit, a valve configured to direct at least a portion of a heat source fluid from the heat source to the heat exchanger.
4. The method of any preceding clause, comprising supporting, via the common support structure of the first unit, an exhaust silencer configured to reduce noise associated with an engine exhaust, wherein the heat source comprises the engine exhaust.
5. The method of any preceding clause, comprising supporting, via the common support structure of the first unit, a fan configured to provide air flow for cooling the working fluid in the condenser of the Rankine cycle.
6. The method of any preceding clause, comprising connecting the first unit to a cooling fluid, wherein the cooling fluid is configured to cool the working fluid in the condenser of the Rankine cycle.
7. The method of any preceding clause, comprising supporting, via the common support structure of the first unit, a controller configured to control operations of the heat exchanger, or the driving pump, or any combination thereof.
8. The method of any preceding clause, comprising supporting, via another common support structure of a second unit, components of a Rankine cycle.
9. The method of any preceding clause, comprising providing a Rankine cycle configured to circulate a working fluid within a closed loop, wherein the closed loop comprises an evaporator, a condenser, a turbine and a pump, wherein the turbine is configured to expand the working fluid from the evaporator, the condenser is configured to condense the working fluid from the turbine, the pump is configured to pressurize the working fluid from the condenser, and the evaporator is configured to vaporize the working fluid from the pump.
10. A system, comprising:
   a controller, comprising:
      one or more tangible, non-transitory, machine-readable media collectively storing one or more sets of instructions; and
      one or more processing devices configured to execute the one or more sets of instructions to monitor or control operations of the system to:
         condense in a condenser a working fluid circulating in a Rankine cycle, wherein the Rankine cycle comprises an evaporator configured to evaporate the working fluid by absorbing heat from a heating fluid circulated in a heating fluid circuit;
         transfer heat from a heat source to the heating fluid in a heat exchanger; and
         provide a driving force for circulating the heating fluid in the heating fluid circuit using a pump, wherein the condenser, the heat exchanger, the pump, and the controller are disposed on a common support structure.
11. The system of any preceding clause, wherein the one or more processing devices are configured to execute the one or more sets of instructions to monitor or control operations of the system to direct via a valve at least a portion of a heat source fluid from the heat source to the heat exchanger, wherein the valve is disposed on the common support structure.

## Claims

1. A system, comprising:
a first unit (10), comprising:
a heat exchanger (28) configured to transfer heat from a heat source (16) to a heating fluid (29) circulated in a heating fluid circuit;
a driving pump (42) configured to provide a driving force for circulating the heating fluid (29) in the heating fluid circuit; and
a common support structure (14), wherein the heat exchanger (28) and the driving pump (42) are mounted on the common support structure (110).

2. The system of claim 1, wherein the first unit (10) comprises a condenser (54) configured to condense a working fluid (45) circulating in a Rankine cycle, wherein the Rankine cycle comprises an evaporator (44) configured to evaporate the working fluid (45) by absorbing heat from the heating fluid circulated in the heating fluid (29) circuit.

3. The system of claim 1 or 2, wherein the first unit (10) comprises a valve (22) configured to direct at least a portion of a heat source fluid (17) from the heat source (16) to the heat exchanger (28), wherein the valve (22) is supported on the common support structure (14).

4. The system of any of claims 1 to 3, wherein the heat source (16) comprises an engine exhaust, wherein the first unit (10) comprises an exhaust silencer (36) configured to reduce noise associated with the engine exhaust, and wherein the exhaust silencer (36) is supported on the common support structure (14).

5. The system of any of claims 2 to 4, wherein the first unit (10) comprises a fan (62) configured to provide air flow for cooling the working fluid (45) in the condenser (54) of the Rankine cycle, and wherein the fan (62) is supported on the common support structure (14).

6. The system of any preceding claim, wherein the common support structure (14) comprises a platform having a plurality of legs (134).

7. The system of any preceding claim, comprising a controller (70) configured to control and coordinate operations of the first unit (100), wherein the controller (70) is supported on the common support structure (14).

8. The system of any preceding claim, comprising a Rankine cycle configured to circulate a working fluid within a closed loop, wherein the closed loop comprises an evaporator (44), a condenser (54), a turbine, and a pump (42), wherein the turbine (52) is configured to expand the working fluid (45) from the evaporator (44), the condenser (54) is configured to condense the working fluid (45) from the turbine, the pump (42) is configured to pressurize the working fluid (45) from the condenser (54), and the evaporator is configured to vaporize the working fluid (45) from the pump (42).

9. A method, comprising:
supporting, via a common support structure (14) of a first unit (100), a heat exchanger (28) configured to transfer heat from a heat source (16) to a heating fluid (29) circulated in a heating fluid circuit; and
supporting, via the common support structure (14) of the first unit (100), a driving pump (42) configured to provide a driving force for circulating the heating fluid (29) in the heating fluid circuit.

10. The method of claim 9, comprising supporting, via the common support structure (14) of the first unit (100), a condenser (54) configured to condense a working fluid (45) circulating in a Rankine cycle, wherein the Rankine cycle comprises an evaporator (44) configured to evaporate the working fluid (45) by absorbing heat from the heating fluid circulated in the heating fluid circuit.

11. The method of claim 9 or 10, comprising supporting, via the common support structure (14) of the first unit (100), a valve (22) configured to direct at least a portion of a heat source fluid (17) from the heat source (16) to the heat exchanger (28).

12. The method of claim 11, comprising supporting, via the common support structure (14) of the first unit (100), an exhaust silencer (36) configured to reduce noise associated with an engine exhaust, wherein the heat source (16) comprises the engine exhaust.

13. The method of any of claims 10 to 12, comprising supporting, via the common support structure (14) of the first unit (100), a fan (62) configured to provide air flow for cooling the working fluid (45) in the condenser (54) of the Rankine cycle.

14. The method of any of claims 9 to 13, comprising connecting the first unit (100) to a cooling fluid (108), wherein the cooling fluid (108) is configured to cool the working fluid (45) in the condenser (54)of the Rankine cycle.

15. The method of any of claims 9 to 14, comprising supporting, via the common support structure (14) of the first unit (10), a controller (70) configured to control operations of the heat exchanger (28), or the driving pump (42), or any combination thereof.
